# EUROPEAN PATENT APPLICATION

(11) **EP 3 420 800 A2**
(43) Date of publication of application: **02.01.2019**
(21) Application number: 18179241.7
(22) Date of filing: 22.06.2018
(51) Int. Cl.: A01D 46/28, A01D 46/26

(54) **HARVESTER FOR COLLECTING RASPBERRIES AND A STAKE FOR GROWING RASPBERRIES**

(30) Priority: 28.06.2017 PL 42203817
(71) Applicant: Wachowski, Miroslaw, 24-200 Belzyce (PL)
(72) Inventor:
(74) Representative: Kalita, Lucjan

(57) **Abstract**

The harvester containing a chassis (1) and two land wheels (2), a drawbar (3) for attaching the harvester to a standard farm tractor, a frame bearer (4) and the service platform (5), and a shaking assembly (6) built-up on the frame bearer (4) containing a finger shaker (7) and a transverse conveyor (8) with a belt (9) and a longitudinal conveyor (11), containing a transport belt (12) and a suction chamber (13) with a fan (14), and below a fall from the perforated belt (12) there is a fruit container (15), and working assemblies, built-up on the frame bearer (4), are generally endowed with hydraulic motors supplied from a pump driven through the power take-off shaft of the farm tractor, characterized in that the shaking assembly (6) has a latticed frame (16) rigidly connected with sides (17) of this transverse conveyor (8), and an assembly (18) created in such a manner is hung on the frame bearer (4). Assembly (18) has two coaxial pins (19) for the height mounting, positioned on sides (17) and a mounting eye (20) for the inclined mounting, placed at an upper element (21) of the latticed frame (16). Whereas, the frame bearer (4) contains two posts (22) affixed by lower ends to a longitudinal element (23) of the chassis (1), and at the top it is connected with a crossbar (24) with an extension arm (25), and directly on stakes (22) or a beam (26) mounted to the posts (22) two lower brackets (27) are coaxially embedded, whereas, an upper bracket (28) is embedded in the extension arm (25). Pins (19) and the lower brackets (27) are connected by lower hydraulic actuators (29) and the upper bracket (28) and the mounting eye (20) are connected by the upper hydraulic actuator (30). The frame bearer (4) is affixed to the chassis (1) in its symmetry plane and can be moved from this plane not more than 150 mm.

The stake for growing raspberries containing a shank (60) nailed or embedded in the ground along a row of planted raspberries and a crosspiece (61) affixed to this shank (60), on which wires are hung and on which this year's mature raspberry sprouts have to be plaited, characterized in that the crosspiece (61) is made of two symmetric arms having the length up to 1200 mm and has the shape of V letter with the angle of flare from 100° to 170°, whereby a grip (62) is mounted to the crosspiece (61) quoin, through which the crosspiece (61) is mounted to the shank (60). The grip (62) simultaneously constitutes the shank (60), the end of which can be nailed or embedded in the ground.

## Description

Harvester for collecting raspberries and a stake for growing raspberries.

The object of the invention is a harvester for collecting raspberries and a stake for growing raspberries.

The specification of the utility model Ru 40401 discloses the berries harvesting machine attached to a farm tractor, composed of a solid frame supported on two land wheels and on a drawbar with the following built-up working assemblies: shakers, a transverse feeder, longitudinal feeder, and fan. This machine suits mainly a single harvest of the currants fruits resistant to mechanical damages, bushes of a small width at the base, on the other hand, they are completely unsuitable for raspberries growing in rows, having the width from 60 to 100 cm, and harvested in a manifold manner, due to different phases of maturation.

The patent specification PL210095 B1 discloses the blueberry fruits harvester, intended especially for raspberries fruiting on this year's sprouts. This harvester, attached to a tractor, exists as a full-row harvester, which means that, while driving amongst raspberries growing on free-standing rows or beds, the harvest takes place on both sides of the row. The harvester has the frame hung on two land wheels and on a drawbar situated in the front part. Those wheels are embedded on columns located in guides affixed to the frame, have a torsional motion and columns in the guides have an extension, vertical motion. Working assemblies, hydraulically driven, together with hydraulic system, are built-up on the frame. In the front part of the harvester, there are landing nets endowed with belts with drivers driven by hydraulic motors, as well as, there is a field divider at the centre of the front part of the frame. In the central part of the harvester, there are shakers making an oscillating rotary motion around its axis, transversely positioned, inclined at the angle towards the vertical axis of the harvester, in the shape of V letter, built-up, whereby the shakers on the left-hand side are rotating along the axis of the harvester towards the tedders on the right-hand side, and below the shakers, there are transverse conveyors inclined at the angle, endowed with threshold belts. Below the upper part of the transverse conveyors, longitudinal carriers with perforated tapes are built-up, above which, in the end part of the conveyors, the suction chambers of cleaning fans are located and below the belt, there is a grate for containers and the service platform.

The specification of the utility model PL 065605 Y1 discloses a half-row berries harvester, particularly for autumn raspberries, having a stable frame supported on the rear part on two permanently embedded land wheels and in the front part embedded on a drawbar transversely inclined by means of a hydraulic actuator. In this solution, on a solid frame, a movable frame is built-up, positioned transversely to the direction of a travel and placed in the upper part in a inclined manner on two pins, and in the lower part is supported by a hydraulic motor enabling taking working position in the lower position or lifting up to the upper position in order to take the transport position.

In the movable frame, the shaker with radially flexible fingers for shaking fruits, attached and driven by means of an inertial head, putting it to oscillating and rotating motion, is built-up. In the front part of the movable frame, a landing net for sprouts endowed with hydraulically driven threshold belts is built-up swingingly. In the front part of the friction edge of the landing net, an inclined slat with a connected microswitches system controlling the location of the drawbar is placed. Under the upper part of the transverse transporter, a longitudinal transporter is located parallel to the harvester axis together with a perforated transporting belt, from which, through the suction conduit, the fan sucks air together with contaminants.

Berries harvesters, disclosed in the two above-mentioned descriptions, are generally intended for harvesting raspberries fruiting on this year's sprouts. In this case, plants are grown in free-standing rows or beds. Sprouts leading is not applied.

A problem to be solved is the structure of the harvester for raspberries growing on last year's sprouts. Such a raspberry crop requires that raspberry sprouts, which had grown during their vegetation period, were lead near supports, which usually are strings stretched along the rows - usually steel wires stretched and mounted on appropriately shaped stakes with crossbars. Raspberry sprouts grown during the period of vegetation in a given year have to be plaited along longitudinally stretched wires, and in a next year the harvest from those fruiting sprouts is made, whereby this harvest is gathered in few phases, due to uneven maturation. Such traditional raspberry crop requires greater expenditures of labour, however, it guarantees a rich harvest and the obtainment of fruits maturing in the height of summer and during the period of maximum sun exposure, as well as in the best atmospheric conditions.

This problem was solved by the harvester for collecting raspberries fruiting on the last year's sprouts, containing the chassis endowed with two land wheels, a drawbar to attach a standard farm tractor, a frame bearer and service platform. The shaking assembly containing the finger shaker and transverse conveyor with the belt and thresholds, as well as a separately mounted longitudinal conveyor containing the perforated belt and the suction chamber with a fan are built-up on the frame bearer. There is a fruit container below the fall from the perforated belt. The working assemblies, built-up on the frame bearer, are generally endowed with hydraulic motors supplied from a pump driven by the power take-off shaft of the farm tractor. This harvester, characterized in that, the shaking assembly, in which the finger shaker and the transverse conveyor is built-up, has a latticed frame rigidly connected with the sides of this transverse conveyor, and the assembly created in such a manner has two coaxial pins for height mounting situated on the sides of the conveyor, as well as the mounting eye, which is able to be inclined, placed on the upper element of the latticed frame. On the other hand, the frame bearer contains two posts fixed by their lower ends to the longitudinal element of the chassis, and at the top, those posts are connected with a crossbar with an extension arm. Directly on the posts or a beam mounted to the posts, two lower brackets are coaxially embedded and the upper bracket is embedded on the extension arm. The pins located on the sides of the transverse conveyor and lower brackets embedded on the posts or the beam mounted to the posts are connected by means of lower hydraulic motors. Such application of two actuators creates the height mounting of the shaking assembly, which can be lifted or lowered at any moment. On the other hand, the upper bracket embedded on the extension arm and the mounting eye embedded on the upper element of the latticed frame are connected by the upper hydraulic actuator, which creates the inclined mounting of the shaking assembly. The angle of inclination of the shaking assembly can be readjusted and adjusted to the land inclination at any moment.

According to the invention, the harvester can be applied only to the raspberries fruiting on the last year's sprouts led on wires hung on cross-pieces affixed to the stakes. What is more, the rows of raspberries should be adequately spaced from each other - the optimal distance is 4000 mm. Also appropriate varieties, which after spreading still leave a pathway not lesser than 1720 mm between the rows, which guarantees a free passage for a tractor with the harvester mounted to it, have to be used. In terms of such a crop, it is advantageous that also the harvester's structure maintain the dimensional regimes, and this conditions that the frame bearer was affixed to the chassis in its symmetry plane and was not moved from this plane more than 150 mm.

The disclosed harvester is intended for the raspberry harvest from one side of the row, which allows accurate adjustment of the harvester to this row. This adjustment can be made both through the change of the harvester's distance from a row of raspberries but also through the height and angle adjustment of the shaking assembly towards the row of raspberries and a layer of fruiting sprouts hung on stretched wires.

Raspberry crop is conducted using stakes with cross-pieces, on which wires along a row of raspberries are hung. This year's mature raspberry sprouts have to be plaited around those wires, and fruits are to be harvested from those sprouts in the next year.

The stake intended for the raspberry crop containing a shank, nailed or embedded in the ground along a row of planted raspberries and the cross-piece affixed to this shank, on which wires are hung, and on which this year's mature raspberry sprouts have to be plaited, characterized in that cross-piece is created of two symmetric arms having the length up to 1200 mm and has the shape of V letter with the angle of flare from 100° to 170°, whereby a grip is mounted to the cross-piece quoin, with which the cross-piece is mounted to the shank. Advantageously, the grip simultaneously constitutes the shank, end of which can be nailed or embedded in the ground.

The use of the cross-piece made of two symmetric arms settled towards each other at an opening angle causes that the layer of fruiting sprouts is also positioned at an acute angle towards the vertically nailed stake. This, in turn, gives the most advantageous sun exposure of this layer of fruiting sprouts and the second advantageous feature of such a positioning, which was found experimentally, is the fact that shaking proceeds gently and fruits, while falling, are not mechanically damaged by the elements of the shaker.

The object of the invention is demonstrated in an exemplary realisation in the figure, in which:

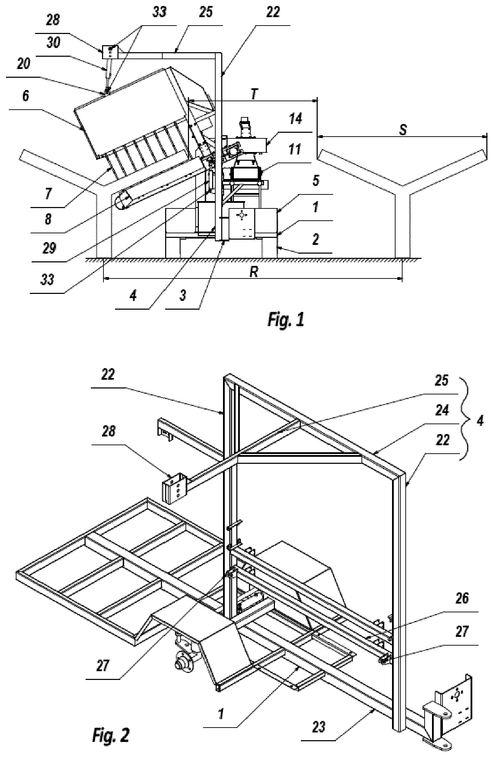

Fig.1 presents the harvester in the front view, situated between two schematically presented rows of raspberries,
Fig.2 presents the chassis of harvester with the frame bearer embedded in the perspective view,

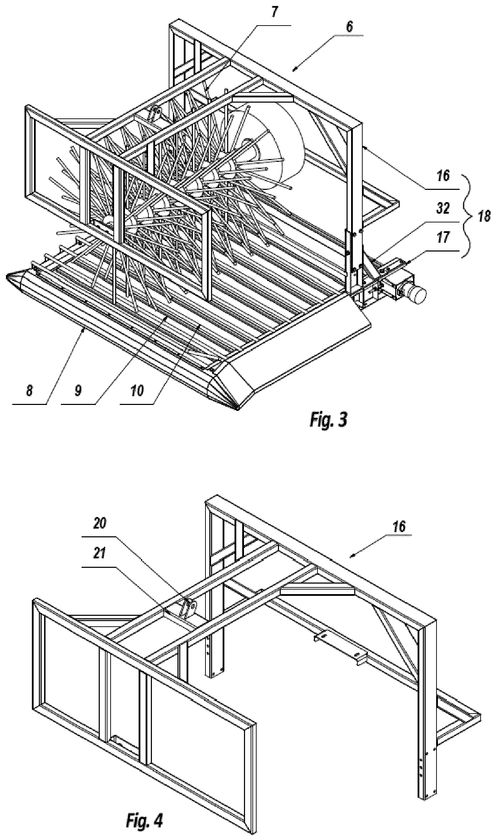

Fig.3 presents the shaking assembly in the perspective view,
Fig.4 presents the latticed frame in the perspective view

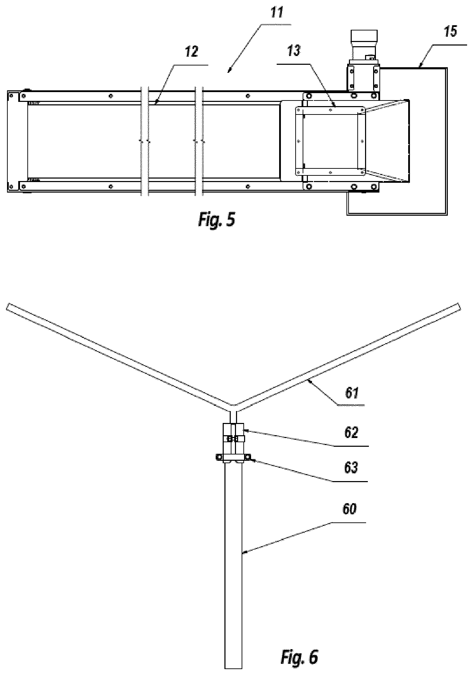

Fig.5 presents the longitudinal conveyor in the top view,
Fig.6 presents the stake for growing raspberries.

### The example of the realisation of the harvester.

The harvester for collecting raspberries fruiting on the last year's sprouts contains the chassis 1 endowed with two land wheels 2, the drawbar 3 for attaching a standard farm tractor, the frame bearer 4 and the service platform 5. On the frame bearer 4, the shaking assembly 6 containing the finger shaker 7 and the transverse conveyor 8 together with the belt 9 and thresholds 10, as well as the longitudinal conveyor 11 containing the transport belt 12 and the suction chamber 13 with the fan 14 are built-up. Below the fall of the transport belt 12, there is the fruit container 15, whereby working assemblies, built-up on the frame bearer 4 are endowed with hydraulic motors supplied from a pump driven through the power take-off shaft of the farm tractor. The frame bearer 4 contains two posts 22 fixed by their lower ends to the longitudinal element 23 of the chassis 1 a at the top, connected with the extension arm 25 with the crossbar 24. The shaking assembly 6 has the latticed frame 16, in which the finger shaker 7 and the transverse conveyor 8 are built-up. This latticed frame 16 is rigidly connected with both sides 17 of this transverse conveyor 8. The element rigidly fastening the latticed frame 16 and sides 17 of the transverse conveyor 8 is a bracket 32 affixed to both elements. The rigid assembly 18, created from the latticed frame 16, sides 17, and the bracket 32, has two coaxial pins 19. Whereas, to both posts 22 the beam 26 is affixed, on which two lower brackets 27 and each of them has a coaxial hole with the hole in the second lower bracket 27. The pins 19 and lower brackets 27 are connected from both sides of the transverse conveyor 8 by means of the lower hydraulic actuators 29, whereby the hydraulic actuator 29 is mounted by one eye on the pin 19 and by the other eye on the lower bracket 27 by means of a pivot 33. The mounting presented above constitutes the height mounting of the shaking assembly 6, which allows this assembly to be lifted or lowered and the assembly itself has the possibility of being inclined around the axis constituting the axis of symmetry of the pins 19 and the axis of holes in the lower brackets 27. On the upper element 21 of the latticed frame 16 the mounting eye 20 is mounted. Whereby, on the extension arm 25 the upper bracket 28 is embedded. The upper bracket 28 and the mounting eye 20 are connected by the upper hydraulic actuator 30, whereby the mounting of both eyes of the actuator 30 is made by using the pivots 33. The mounting presented above constitutes the inclined mounting of the shaking assembly 6, which allows this assembly to be inclined in order to provide a proper, angled adjustment of the inclination of the transverse conveyor 8 and the finger shaker 7 towards the layer of fruiting raspberry sprouts stretched on the wires attached to crosspieces 61.

The frame bearer 4 is affixed to the chassis 1 within its symmetry plane. Such a position of the frame bearer 4 allows the tractor and the hauled harvester to drive in one direction and back on the same tracks. What is more, in the exemplary realisation, the half-row harvester for shaking one side of a row of raspberries is disclosed. On the frame bearer 4, on both its sides, the same working assemblies as were used in the half-row harvester can be mounted. Then, such a harvester, during a single passage between rows will shake the halves of adjacent rows of raspberries. The condition for the application of the harvester for shaking fruits from two adjacent rows is to produce raspberry crop with the use of dimensional regimes, that is the following distances: R - spacing of the rows of raspberries, S width - the external size of the sprouts of raspberries placed on the wires and the T width - the space between the rows. Advantageously, those dimensions are as follows: R = 4000 mm, S = 2275 mm, T = 1725 mm.

### Example 1 of the realisation of the stake.

The stake for growing raspberries is composed of the shank 60 which, when used to the crop, is nailed or embedded in the ground along the row of planted raspberries and the crosspiece 61 affixed to this shank 60, to which wires are to be attached and on which mature, this year's raspberry sprouts have to be plaited. The crosspiece 61 is made of two symmetric arms having length of 1200 mm and the shape of V letter of the angle of flare of 130°. The grip 62, by which the crosspiece 61 is mounted to the shank 60 of the stake. In the exemplary realisation, the grip 62 is mounted to the shank 60 of the stake by means of a clamps 63.

### Example 2 of the realisation of the stake.

The grip 62 simultaneously constitutes the shank 60, end of which can be nailed or embedded in the ground.

### Example 3 of the realisation of the stake.

The shank 60 of the stake has a longitudinal hole in the upper ending, into which the grip 62 has to be slipped. In this solution no additional fastening of assembled elements of the stake is required because the load of the crossbar is always directed downwards.

## Claims

1. The harvester for collecting raspberries fruiting on the last year's sprouts containing a chassis (1) endowed with two land wheels (2), a drawbar (3) for attaching the harvester to a standard farm tractor, a frame bearer (4) and a service platform (5), and on the frame bearer (4) there are: a shaking assembly (6) containing a finger shaker (7) and a transverse conveyor (8) with a belt (9), and thresholds (10), and a longitudinal conveyor (11) containing a transport belt (12) and a suction chamber (13) with a fan (14) built-up, and below the fall from a perforated belt (12) there is a fruit container (15), whereby working assemblies built-up on the frame bearer (4) are generally endowed with hydraulic motors supplied from a pump driven through the power take-off shaft of a farm tractor, **characterized in that** the shaking assembly (6), in which the finger shaker (7) and the transverse conveyor (8) are built-up, has a latticed frame (16) rigidly connected with the sides (17) of this transverse conveyor (8), and an assembly (18) created in such a manner has two coaxial pins (19) for the height mounting, positioned on sides (17) and a mounting eye (20) for the inclined mounting, placed at an upper element (21) of the latticed frame (16), whereas, the frame bearer (4) contains two posts (22) affixed by lower ends to a longitudinal element (23) of the chassis (1), and connected at the top by a crossbar (24) with an extension arm (25) and directly on posts (22) or on a beam (26) attached to the posts (22) two lower brackets (27) are coaxially embedded, and on the extension arm (25) the upper bracket (28) is embedded, and moreover, pins (19) and lower brackets (27) are connected by means of lower hydraulic actuators (29) and the upper bracket (28) and the mounting eye (20) are connected by an upper hydraulic actuator (30).

2. The harvester according to the claim 1, **characterized in that** the frame bearer (4) is affixed to the chassis (1) in its symmetry plane and can be moved from this plane not more than 150 mm.

3. The stake for growing raspberries containing a shank (60) nailed or embedded in the ground along a row of planted raspberries and a crosspiece (61) affixed to this shank (60), on which wires are hung and on which this year's mature raspberry sprouts have to be plaited, **characterized in that** the crosspiece (61) is made of two symmetric arms having the length up to 1200 mm and has the shape of V letter with the angle of flare from 100° to 170°, whereby a grip (62) is mounted to the crosspiece (61) quoin, through which the crosspiece (61) is mounted to the shank (60).

4. The stake according to the claim 3, **characterized in that** the grip (62) simultaneously constitutes the shank (60), the end of which can be nailed or embedded in the ground.
